# EUROPEAN PATENT APPLICATION

(11) **EP 3 818 914 A1**
(43) Date of publication of application: **12.05.2021**
(21) Application number: 20199134.6
(22) Date of filing: 30.09.2020
(51) Int. Cl.: A47J 31/46

(54) **WATER PASSAGE STRUCTURE AND COFFEE MACHINE**

(30) Priority: 11.11.2019 CN 201911097312
(71) Applicant: Tsann Kuen (Zhangzhou) Enterprise Co., Ltd., Fujian 363107 (CN)
(72) Inventor: ZHANG, Yanxiang, Zhang Zhou, Fujian 363107 (CN)
(74) Representative: Zaboliene, Reda

(57) **Abstract**

A water passage structure includes a water heating device and a brewing head. The brewing head includes a drainage inlet, a water passage chamber, a drainage outlet and a water supply channel. The water passage chamber is communicated with the drainage inlet and the drainage outlet. The water supply channel is located adjacent to and isolated from the water passage chamber. The drainage inlet and a water inlet of the water supply channel are each controllable to be communicated with a water outlet of the water heating device. The water heating device can firstly discharge hot water into the water passage chamber to preheat the brewing head, and after the brewing head is preheated, the water heating device supplies hot water through the water supply channel, so as to meet the requirements of stable temperature of the first outlet water.

## Description

### TECHNICAL FIELD

The present invention relates to the technical field of household appliances, and in particular, to a water passage structure and a coffee machine.

### BACKGROUND OF THE INVENTION

At present, most coffee machines on the market control the temperature of the coffee by controlling the heating temperature of the water heating device, so as to improve the taste and quality of coffee. However, the hot water from the water heating device needs to flow through the brewing head and then into the filter containing coffee powder for use. As a result, the temperature of the hot water finally used for brewing coffee is unstable due to too much heat absorption of the brewing head, which leads to the coffee temperature unable to meet the requirements, especially the temperature of the first cup of coffee is very unstable, to directly affect the taste and quality of coffee.

### SUMMARY OF THE INVENTION

In view of the above technical problems, the present invention provides a water passage structure and a coffee machine, which can preheat the brewing head and meet the requirements of stable temperature of the first outlet water.

In order to solve the above technical problems, the present invention provides a water passage structure, including a water heating device and a brewing head. The brewing head includes a drainage inlet, a water passage chamber, a drainage outlet and a water supply channel. The water passage chamber is communicated with the drainage inlet and the drainage outlet. The water supply channel is located adjacent to and isolated from the water passage chamber. The drainage inlet and a water inlet of the water supply channel are each controllable to be communicated with a water outlet of the water heating device.

Further, at least a buffer rib is provided in the water passage chamber.

Further, the brewing head includes a main body and a cover. The main body is in a groove shape and has an opening at an upper side. The cover is sealed at the opening through a sealing element. The water passage chamber is jointly defined by the cover and a bottom wall and a side wall of the main body.

Further, the water supply channel is vertically arranged on an inner side of the bottom wall of the main body. The water inlet of the water supply channel vertically penetrates through the cover. The drainage inlet vertically penetrates through the cover. A water outlet of the water supply channel penetrates through the bottom wall of the main body. The drainage outlet transversely penetrates through the side wall of the main body.

Further, the water supply channel transversely penetrates into the side wall of the main body and extends to the bottom wall of the main body along an inner side of the side wall. A water outlet of the water supply channel penetrates through the bottom wall of the main body. Each of the drainage inlet and the drainage outlet transversely penetrates through the side wall of the main body.

Further, a height between the drainage inlet and the bottom wall of the main body is greater than that between the drainage outlet and the bottom wall of the main body. The water heating device is arranged on the cover or integrally formed with the cover.

Further, the water passage structure includes a valve, a main pipe, a drainage pipe and a water supply pipe. The valve includes a first water inlet, a first water outlet and a second water outlet. The main pipe communicates the water outlet of the water heating device with the first water inlet. The drainage pipe communicates the first water outlet with the drainage inlet. The water supply pipe communicates the second water outlet with the water inlet of the water supply channel.

Further, the valve is a solenoid valve, and the valve is configured to switch the communication state between the first water inlet and the first water outlet or the second water outlet according to control signals.

The present invention further provides a coffee machine, including a water passage structure as described above.

Further, the coffee machine includes a filter for containing coffee powder. When the filter is installed on the brewing head of the water passage structure, a brewing chamber is jointly defined by the filter and the brewing head. The brewing chamber is located adjacent to and isolated from the water passage chamber of the brewing head. The water outlet of the water supply channel is communicated with the brewing chamber.

The present invention further provides a coffee machine, including a water heating device, a valve, a brewing head and a filter. The valve has a first water inlet, a first water outlet and a second water outlet. The brewing head includes a drainage inlet, a water passage chamber, a drainage outlet and a water supply channel. The filter is defined with a brewing chamber configured for containing coffee powder to be brewed by hot water;
wherein each of the drainage inlet and the drainage outlet is communicated with the water passage chamber, each of the water supply channel and the brewing chamber is located adjacent to and isolated from the water passage chamber, a water outlet of the water heating device is communicated with the first water inlet of the valve through a main pipe, the first water outlet of the valve is communicated with the drainage inlet of the brewing head through a drainage pipe, the second water outlet of the valve is communicated with a water inlet of the water supply channel through a water supply pipe, a water outlet of the water supply channel is communicated with the brewing chamber;
wherein before the coffee powder is brewed, the valve is controlled to switch to a first state in which the first water inlet of the valve communicates with the first water outlet of the valve and is isolated from the second water outlet of the valve, and hot water from the water heating device enters the water passage chamber to preheat the brewing head;
wherein after the brewing head is preheated, the valve is controlled to switch to a second state in which the first water inlet of the valve communicates with the second water outlet of the valve and is isolated from the first water outlet of the valve, and hot water from the water heating device enters the brewing chamber through the water supply channel to brew the coffee powder into coffee.

Further, the brewing head includes a main body and a cover. The main body is in a groove shape and has an opening at an upper side. The cover is sealed at the opening through a sealing element. The water passage chamber is jointly defined by the cover and a bottom wall and a side wall of the main body.

Further, the water supply channel transversely penetrates into the side wall of the main body and extends to the bottom wall of the main body along an inner side of the side wall. Each of the drainage inlet and the drainage outlet transversely penetrates through the side wall of the main body. The water outlet of the water supply channel penetrates through the bottom wall of the main body.

Further, the water supply channel is vertically arranged on an inner side of the bottom wall of the main body. The water supply channel is located in a middle of the bottom wall and surrounded by the water passage chamber. The drainage inlet vertically penetrates through the cover, and the drainage outlet transversely penetrates through the side wall of the main body. The water outlet of the water supply channel penetrates through the bottom wall of the main body.

Further, the valve is a solenoid valve, and the coffee machine further includes a controller configured to control the solenoid valve.

As described above, the water passage structure of the present invention includes a water heating device and a brewing head. The brewing head includes a drainage inlet, a water passage chamber, a drainage outlet and a water supply channel. The water passage chamber is communicated with the drainage inlet and the drainage outlet. The water supply channel is located adjacent to the water passage chamber. The drainage inlet and the water inlet of the water supply channel are each controllable to be communicated with the water outlet of the water heating device. Because the water passage structure is provided with a water passage chamber communicated with the water heating device in the brewing head, and the water supply channel is located adjacent to the water passage chamber, the water heating device can firstly discharge hot water into the water passage chamber to preheat the brewing head, and then supply hot water through the water supply channel, so as to meet the requirements of stable temperature of the first outlet water. When a coffee machine using the above water passage structure is turned on to make coffee, the temperature can meet the requirements to effectively improve the taste and quality of coffee.

### BRIEF DESCRIPTION OF THE DRAWINGS

Fig. 1 is a schematic view of the overall structure of a brewing head of a coffee machine according to a first embodiment;
Fig. 2 is an exploded, schematic view of the brewing head of the coffee machine according to the first embodiment;
Fig. 3 is a schematic view of a main body of the brewing head of the coffee machine according to the first embodiment;
Fig. 4 is a cross-sectional view of the brewing head of the coffee machine according to the first embodiment;
Fig. 5 is a cross-sectional view of the overall structure of the coffee machine according to the first embodiment;
Fig. 6 is a block diagram of the water passage structure of the coffee machine according to the first embodiment;
Fig. 7 is a schematic view showing the connection structure of the coffee machine according to the first embodiment;
Fig. 8 is a schematic view of the overall structure of a brewing head of a coffee machine according to a second embodiment;
Fig. 9 is an exploded, schematic view of the brewing head of the coffee machine according to the second embodiment;
Fig. 10 is a cross-sectional view of the brewing head of the coffee machine according to the second embodiment;
Fig. 11 is a cross-sectional view of the overall structure of the coffee machine according to the second embodiment;
Fig. 12 is a block diagram of the water passage structure of the coffee machine according to the second embodiment; and
Fig. 13 is a schematic view showing the connection structure of the coffee machine according to the second embodiment.

### DETAILED DESCRIPTION OF PREFERRED EMBODIMENTS

In the following, the implementation mode of the present invention is described by specific embodiments. Persons familiar with the technology can easily understand other advantages and effects of the present invention from the contents disclosed in the specification.

In the following description, several embodiments of the present invention are described with reference to the accompanying drawings. It should be understood that other embodiments may be used and that changes in mechanical composition, structure, electricity and operation may be made without departing from the spirit and scope of the present invention. The following detailed description should not be considered restrictive, and the scope of the embodiments of the present invention is limited only by the claims of the patent. The terms used herein are intended to describe specific embodiments only and are not intended to limit the present invention.

Although in some instances the terms "first", "second", etc. are used in the description to describe various elements, these elements should not be limited by these terms. These terms are used only to distinguish one element from another.

The water passage structure of the present invention includes a water heating device and a brewing head. The brewing head includes a drainage inlet, a water passage chamber, a drainage outlet and a water supply channel. The water passage chamber is communicated with the drainage inlet and the drainage outlet. The water supply channel is located adjacent to the water passage chamber. The drainage inlet and the water inlet of the water supply channel are each controllable to be communicated with the water outlet of the water heating device. Because the water passage structure is provided with a water passage chamber in the brewing head, and the water supply channel is located adjacent to the water passage chamber, the water heating device can firstly discharge hot water into the water passage chamber to preheat the brewing head, and then supply hot water through the water supply channel, so as to meet the requirements of stable temperature of the first outlet water.

It can be understood that the water passage structure of the present invention can improve the temperature stability of the first water outlet of the electric appliance. Therefore, the water passage structure of the present invention can be applied to brewing coffee, tea, medicine and other appliances that need stable outlet water temperature, so as to improve the brewing effect.

### First embodiment

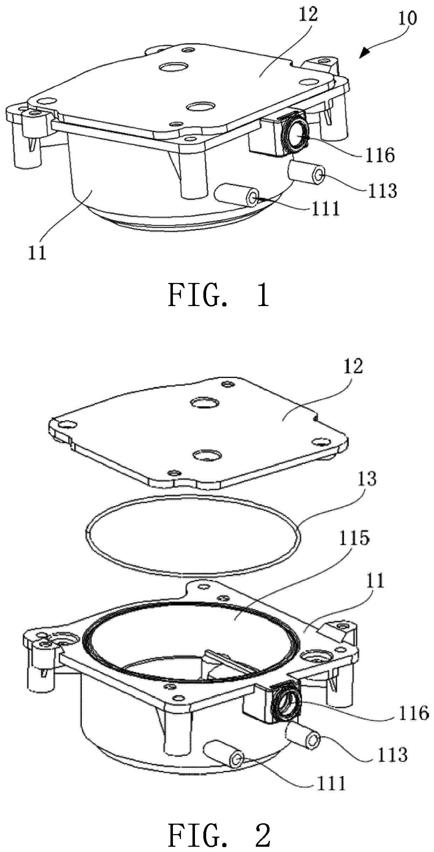

This embodiment illustrates the water passage structure of the present invention used in a coffee machine as an example. Referring to Figs. 1 to 4, the brewing head 10 of the coffee machine in this embodiment includes a drainage inlet 111, a water passage chamber 115, a drainage outlet 113 and a water supply channel 110. The water passage chamber 115 is communicated with the drainage inlet 111 and the drainage outlet 113. The water supply channel 110 is located adjacent to and isolated from the water passage chamber 115.

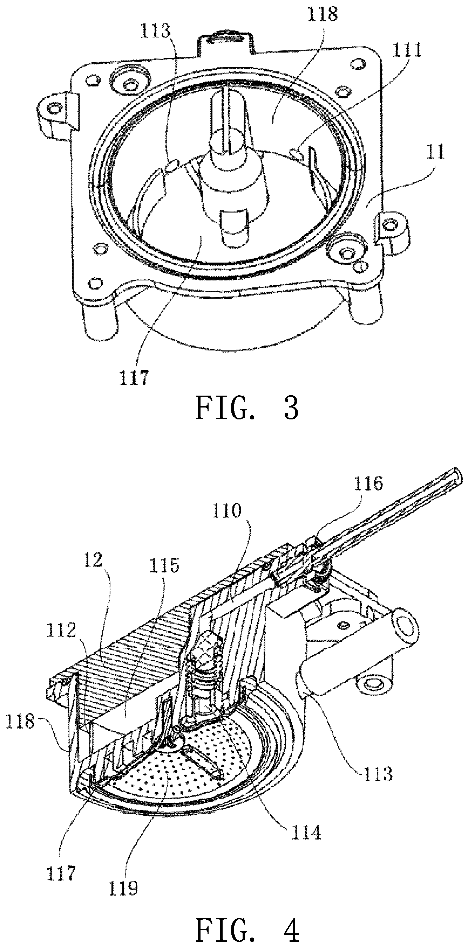

In this embodiment, the brewing head 10 includes a main body 11 and a cover 12. The main body 11 is in a groove shape and has an opening at the upper side. The cover 12 is sealed at the opening through a sealing element 13. The water passage chamber 115 is jointly defined by the cover 12 and the bottom wall 117 and the side wall 118 of the main body 11. The sealing element 13 is, for example, a sealing ring. The main body 11 has a circular shape, the bottom wall 117 of the main body 11 is opposite to the opening of the main body 11, and a circular groove is defined by the bottom wall 117 and the side wall 118. The water supply channel 110 transversely penetrates into the side wall 118 of the main body 11 and extends to the bottom wall 117 of the main body 11 along the inner side of the side wall 118. The water outlet 114 of the water supply channel 110 penetrates through the bottom wall 117 of the main body 11. Each of the drainage inlet 111 and the drainage outlet 113 transversely penetrates through the side wall 118 of the main body 11, thereby forming a transverse water inlet structure. As shown in Fig. 4, the bottom wall 117 of the main body 11 of the brewing head 10 is the water outlet side of the brewing hot water, and a filtering screen 119 is installed on the outer side of the bottom wall 117 of the main body 11 in order to filter the hot water from the brewing head 10 and make the hot water flow out more evenly.

In use, the hot water entering the brewing head 10 from the drainage inlet 111 passes through the water passage chamber 115 and then is discharged from the drainage outlet 113. Since the water supply channel 110 is located adjacent to and isolated from the water passage chamber 115, the hot water passing through the water passage chamber 115 can preheat the water supply channel 110 and the surroundings. After that, the temperature of the hot water entering the water supply channel 110 will not be unstable due to the heat absorption of the water supply channel 110.

Furthermore, in order to fully preheat the brewing head 10 by the hot water entering the water passage chamber 115, at least a buffer rib 112 can be arranged in the water passage chamber 115 to guide the hot water and prolong the hot water path, so as to improve the preheating uniformity. The buffer rib 112 can be directly arranged on the inner side of the bottom wall 117 or on the inner side of the cover 12 facing the main body 11. In practice, according to different preheating areas, the water passage chamber 115 can also be designed into different shapes, such as annular, tubular, etc., and the shape of the water passage chamber 115 is not limited here.

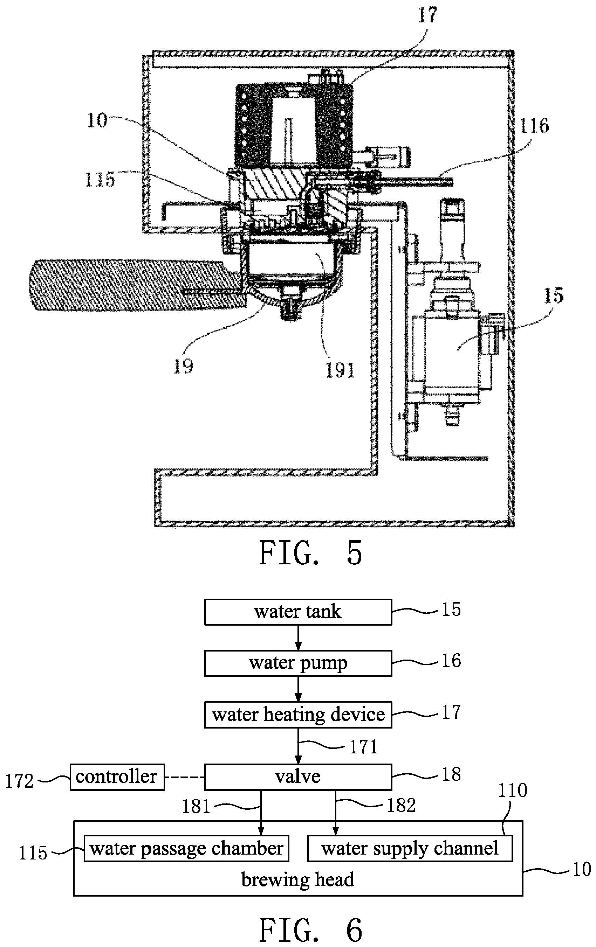

Referring to Fig. 5 and Fig. 6, the coffee machine of this embodiment further includes a water heating device 17 and a filter 19 for containing coffee powder. When the filter 19 is installed on the brewing head 10, a brewing chamber 191 is jointly defined by the filter 19 and the brewing head 10. The filter 19 has a receiving cavity for containing coffee powder and a coffee filtering device. After the coffee is brewed, the coffee is filtered through the coffee filtering device for drinking. The filter 19 is installed on the outside of the bottom wall 117 of the main body 11. The receiving cavity of the filter 19 and the bottom wall 117 of the main body 11 jointly define the brewing chamber 191. The brewing chamber 191 is located adjacent to and isolated from the water passage chamber 115. The drainage inlet 111 of the brewing head 10 and the water inlet 116 of the water supply channel 110 are each controllable to be communicated with the water outlet 173 of the water heating device 17. The water outlet 114 of the water supply channel 110 is communicated with the brewing chamber 191, and the hot water from the water supply channel 110 is used for brewing coffee.

In use, the filter 19 is filled with coffee powder and installed on the brewing head 10, and then the preheating process is started. The hot water is discharged from the water heating device 17, enters the water passage chamber 115 in the brewing head 10 from the drainage inlet 111, and then is discharged from the drainage outlet 113. Since the water supply channel 110 and the brewing chamber 191 are located adjacent to and isolated from the water passage chamber 115, the hot water passing through the water passage chamber 115 can preheat the water supply channel 110, the brewing chamber 191 and their surroundings. After that, the temperature of the hot water entering the water supply channel 110 from the water heating device 17 will not be unstable due to the heat absorption of the water supply channel 110, and the temperature of the hot water entering the brewing chamber 191 will not be unstable due to the heat absorption of the bottom wall 117 of the brewing head 10.

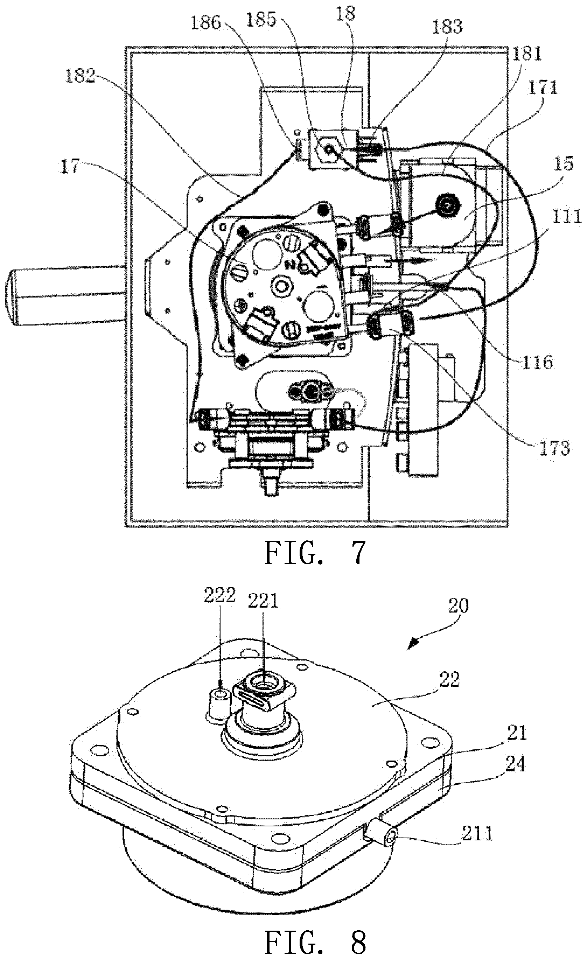

Referring to Fig. 6 and Fig. 7, in order to control the flowing direction of the hot water, the coffee machine in this embodiment further includes a valve 18, a main pipe 171, a drainage pipe 181 and a water supply pipe 182. The valve 18 includes a first water inlet 183, a first water outlet 185 and a second water outlet 186. The main pipe 171 communicates the water outlet 173 of the water heating device 17 with the first water inlet 183, the drainage pipe 181 communicates the first water outlet 185 with the drainage inlet 111, and the water supply pipe 182 communicates the second water outlet 186 with the water inlet 116 of the water supply channel 110. By controlling the communication state between the first water inlet 183 and the first water outlet 185 or the second water outlet 186, the hot water from the water heating device 17 can be controlled to enter the water passage chamber 115 or the water supply channel 110 of the brewing head 10. When the hot water from the water heating device 17 is controlled to enter into the water passage chamber 115 of the brewing head 10, it can realize the function of preheating. The coffee machine of this embodiment may further include a water tank 15 and a water pump 16. When the water heating device 17 starts to work, the water pump 16 pumps the water in the water tank 15 to enter the water heating device 17 for heating, and the water heating device 17 is, for example, an electric heating plate. In this embodiment, since both the drainage inlet 111 and the drainage outlet 113 are arranged on the side of the brewing head 10, the water heating device 17 can be directly arranged on the cover 12 of the brewing head 10, or the water heating device 17 can be integrally formed with the cover 12. Thus, when the water heating device 17 works, the water passage chamber 115 can be heated together, and the preheating effect is better.

In practice, the valve 18 can be a manual control valve or an electric control valve. In this embodiment, the valve 18 is a solenoid valve, and the coffee machine further includes a controller 172. The controller 172 controls the valve 18 to switch the communication state between the first water inlet 183 and the first water outlet 185 or the second water outlet 186 according to the control signals received. For example, after the filter 19 filled with the coffee powder is installed on the brewing head 10, the button to make coffee is clicked, and the controller 172 controls the valve 18 to switch firstly to the state in which the first water inlet 183 communicates with the first water outlet 185. At this time, the hot water from the water heating device 17 enters the water passage chamber 115 of the brewing head 10 through the drainage pipe 181, and then is discharged from the drainage outlet 113 to complete the preheating, so that the brewing head 10 reaches a high temperature. After that, the controller 172 controls the valve 18 to automatically switch to the coffee making process, that is, the valve 18 is controlled to switch to the state in which the first water inlet 183 communicates with the second water outlet 186. At this time, the hot water from the water heating device 17 enters the water supply channel 110 of the brewing head 10 through the water supply pipe 182, then is discharged from the water outlet 114 of the water supply channel 110 and enters the brewing chamber 191 to brew the coffee powder and start making coffee.

In addition, after the coffee is made, the water can be drained through the drainage pipe 181 and the water passage chamber 115 to discharge the excess water in the water heating device 17, so as to avoid the residual water affecting the performance of the coffee machine and the drinking health. In order to fully discharge the hot water, as shown in Fig. 3, the drainage inlet 111 and the drainage outlet 113 penetrates through the side wall 118 of the main body 11. The height between the drainage inlet 111 and the bottom wall 117 is greater than that between the drainage outlet 113 and the bottom wall 117. In this embodiment, the drainage line of the coffee machine is designed together with the water supply line, the preheating of the cold machine can be completed by using the drainage line, and the structure is compact and simple without additional preheating structure.

### Second embodiment

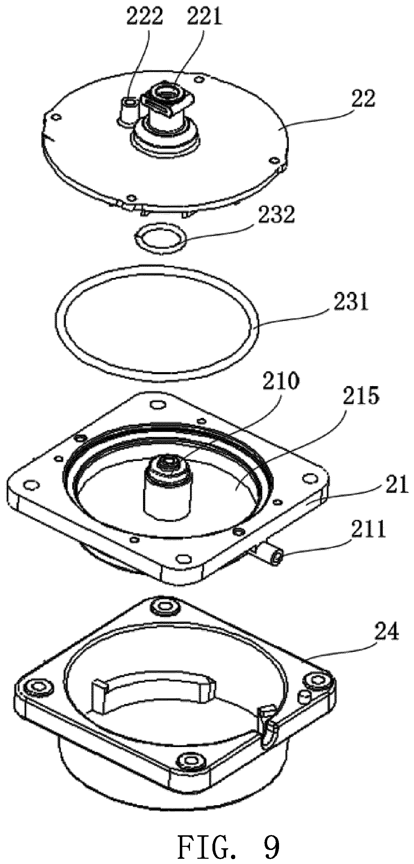

This embodiment illustrates the water passage structure of the present invention used in a coffee machine as an example. Referring to Figs. 8 to 10, the brewing head 20 of the coffee machine in this embodiment includes a drainage inlet 222, a water passage chamber 215, a drainage outlet 211 and a water supply channel 210. The water passage chamber 215 is communicated with the drainage inlet 222 and the drainage outlet 211. The water supply channel 210 is located adjacent to and isolated from the water passage chamber 215.

In this embodiment, the brewing head 20 includes a main body 21 and a cover 22. The main body 21 is in a groove shape and has an opening at the upper side. The cover 22 is sealed at the opening by a sealing element. The cover 22 and the bottom wall 217 and the side wall 218 of the main body 21 jointly define the water passage chamber 215. The main body 21 has a circular shape, the bottom wall 217 of the main body 21 is opposite to the opening of the main body 21, and a circular groove is defined by the bottom wall 217 and the side wall 218.

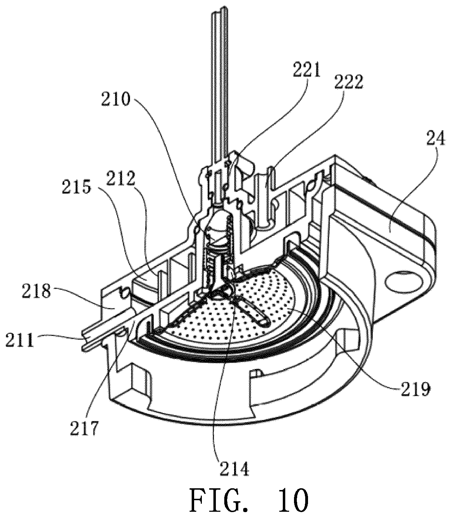

Different from the first embodiment, the water supply channel 210 of the brewing head 20 in this embodiment is vertically arranged on the inner side of the bottom wall 217 of the main body 21. The water supply channel 210 is located in the middle of the bottom wall 217 and surrounded by the water passage chamber 215. The water outlet 214 of the water supply channel 210 penetrates through the bottom wall 217 of the main body 21, and the water inlet 221 of the water supply channel 210 vertically penetrates through the cover 22. The cover 22 is further provided with the drainage inlet 222 which also vertically penetrates through the cover 22. The drainage outlet 211 transversely penetrates through the side wall 218 of the main body 21, thereby forming a vertical water inlet structure. The hot water flowing through the water passage chamber 215 can more fully preheat the surrounding areas of the water supply channel 210, and the preheating effect is better. In this embodiment, the sealing element includes a first sealing ring 231 and a second sealing ring 232, wherein the first sealing ring 231 is located between the top of the side wall 218 of the main body 21 and the cover 22, and the second sealing ring 232 is located between the top of the water supply channel 210 and the bottom of the water inlet 221 of the cover 22. As shown in Fig. 10, the bottom wall 217 of the main body 21 of the brewing head 20 is the water outlet side of the brewing hot water, and a filtering screen 219 is installed on the outer side of the bottom wall 217 of the main body 21 in order to filter the hot water from the brewing head 20 and make the hot water flow out more evenly.

In use, the filter 19 is filled with coffee powder and installed on the brewing head 10, and then the preheating process is started. The hot water entering the brewing head 20 from the drainage inlet 222 passes through the water passage chamber 215, and then is discharged from the drainage outlet 211. Since the water supply channel 210 is located adjacent to and isolated from the water passage chamber 215, the hot water passing through the water passage chamber 215 can preheat the water supply channel 210 and the surroundings. After that, the temperature of the hot water entering the water supply channel 210 will not be unstable due to the heat absorption of the water supply channel 210.

Furthermore, in order to fully preheat the brewing head 20 by the hot water entering the water passage chamber 215, at least a buffer rib 212 can be arranged in the water passage chamber 215 to guide the hot water and prolong the hot water path, so as to improve the preheating uniformity. The buffer rib 212 can be directly arranged on the inner side of the bottom wall 217 or on the inner side of the cover 22 facing the main body 21. In practice, according to different preheating areas, the water passage chamber 215 can also be designed into different shapes, such as annular, tubular, etc., and the shape of the water passage chamber 215 is not limited here.

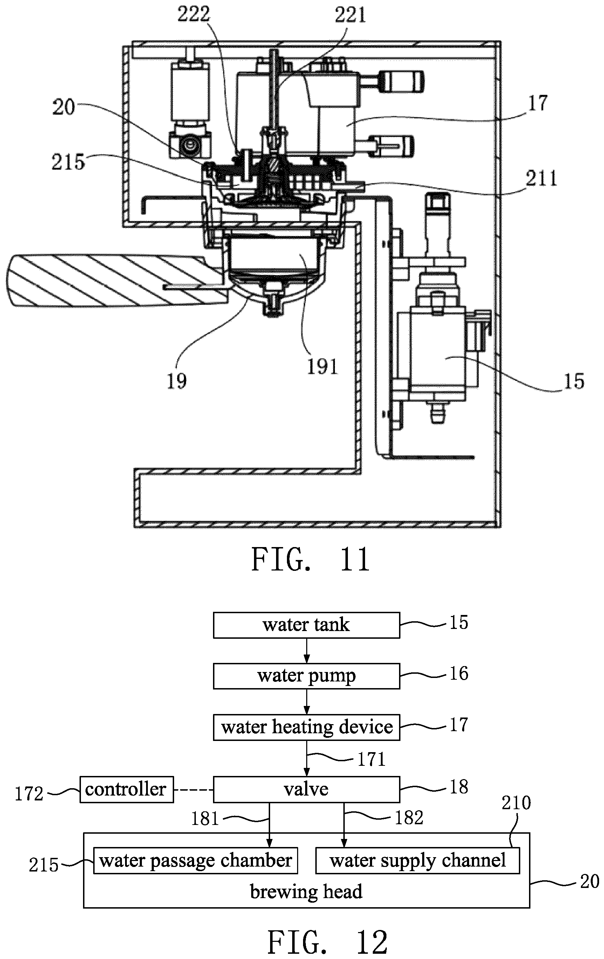

Referring to Fig. 11 and Fig. 12, the coffee machine of this embodiment further includes a water heating device 17 and a filter 19 for containing coffee powder. When the filter 19 is installed on the brewing head 20, a brewing chamber 191 is jointly defined by the filter 19 and the brewing head 20. The filter 19 has a receiving cavity for containing coffee powder and a coffee filtering device. After the coffee is brewed, the coffee is filtered through the coffee filtering device for drinking. Referring also to Fig. 10, the filter 19 is installed on the outside of the bottom wall 217 of the main body 21. Specifically, the filter 19 can be connected to the brewing head 20 through a mounting frame 24 fixed on the main body 21. The receiving cavity of the filter 19 and the bottom wall 217 of the main body 21 jointly define the brewing chamber 191. The brewing chamber 191 is located adjacent to and isolated from the water passage chamber 215. The drainage inlet 222 of the brewing head 20 and the water inlet 221 of the water supply channel 210 are each controllable to be communicated with the water outlet 173 of the water heating device 17. The water outlet 214 of the water supply channel 210 is communicated with the brewing chamber 191, and the hot water from the water supply channel 210 is used for brewing coffee.

In use, the filter 19 is filled with coffee powder and installed on the brewing head 10, and then the preheating process is started. The hot water is discharged from the water heating device 17, enters the water passage chamber 215 in the brewing head 20 from the drainage inlet 222, and then is discharged from the drainage outlet 211. Since the water supply channel 210 and the brewing chamber 191 are located adjacent to and isolated from the water passage chamber 215, the hot water passing through the water passage chamber 215 can preheat the water supply channel 210, the brewing chamber 191 and their surroundings. After that, the temperature of the hot water entering the water supply channel 210 from the water heating device 17 will not be unstable due to the heat absorption of the water supply channel 210, and the temperature of the hot water entering the brewing chamber 191 will not be unstable due to the heat absorption of the bottom wall 217 of the brewing head 20.

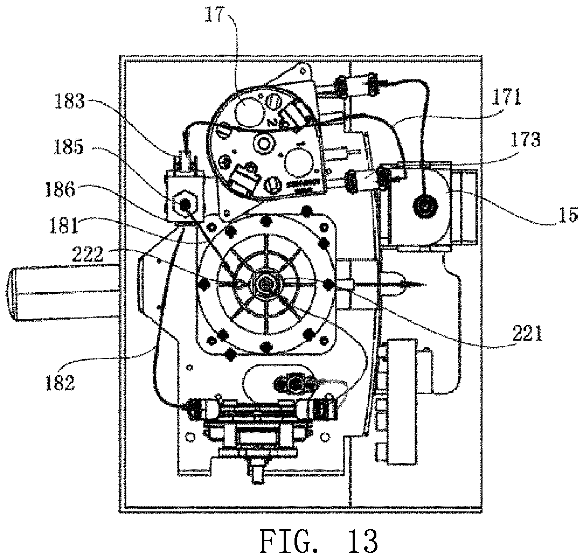

Referring to Fig. 12 and Fig. 13, in order to control the flowing direction of the hot water, the coffee machine in this embodiment further includes a valve 18, a main pipe 171, a drainage pipe 181 and a water supply pipe 182. The valve 18 includes a first water inlet 183, a first outlet 185 and a second water outlet 186. The main pipe 171 communicates the water outlet 173 of the water heating device 17 with the first water inlet 183, the drainage pipe 181 communicates the first water outlet 185 with the drainage inlet 222, and the water supply pipe 182 communicates the second water outlet 186 with the water inlet 221 of the water supply channel 210. By controlling the communication state between the first water inlet 183 and the first water outlet 185 or the second water outlet 186, the hot water from the water heating device 17 can be controlled to enter the water passage chamber 215 or the water supply channel 210 of the brewing head 20. When the hot water from the water heating device 17 is controlled to enter into the water passage chamber 215 of the brewing head 20, it can realize the function of preheating. The coffee machine of this embodiment may further include a water tank 15 and a water pump 16. When the water heating device 17 starts to work, the water pump 16 pumps the water in the water tank 15 to enter the water heating device 17 for heating, and the water heating device 17 is, for example, an electric heating plate.

In practice, the valve 18 can be a manual control valve or an electric control valve. In this embodiment, the valve 18 is a solenoid valve, and the coffee machine further includes a controller 172. The controller 172 controls the valve 18 to switch the communication state between the first water inlet 183 and the first water outlet 185 or the second water outlet 186 according to the control signals received. For example, after the filter 19 filled with the coffee powder is installed on the brewing head 20, the button to make coffee is clicked, and the controller 172 controls the valve 18 to switch firstly to the state in which the first water inlet 183 communicates with the first water outlet 185. At this time, the hot water from the water heating device 17 enters the water passage chamber 215 of the brewing head 20 through the drainage pipe 181, and then is discharged from the drainage outlet 211 to complete the preheating, so that the brewing head 20 reaches a high temperature. After that, the controller 172 controls the valve 18 to automatically switch to the coffee making process, that is, the valve 18 is controlled to switch to the state in which the first water inlet 183 communicates with the second water outlet 186. At this time, the hot water from the water heating device 17 enters the water supply channel 210 of the brewing head 20 through the water supply pipe 182, then is discharged from the water outlet 214 of the water supply channel 210 and enters the brewing chamber 191 to brew the coffee powder and start making coffee.

In addition, after the coffee is made, the water can be drained through the drainage pipe 181 and the water passage chamber 215 to discharge the excess water in the water heating device 17, so as to avoid the residual water affecting the performance of the coffee machine and the drinking health. In this embodiment, the drainage line of the coffee machine is designed together with the water supply line, the preheating of the cold machine can be completed by using the drainage line, and the structure is compact and simple without additional preheating structure.

As described in the above embodiments, the water passage structure of the present invention includes a water heating device and a brewing head. The brewing head includes a drainage inlet, a water passage chamber, a drainage outlet and a water supply channel. The water passage chamber is communicated with the drainage inlet and the drainage outlet. The water supply channel is located adjacent to the water passage chamber. The drainage inlet and the water inlet of the water supply channel are each controllable to be communicated with the water outlet of the water heating device. Because the water passage structure is provided with a water passage chamber communicated with the water heating device in the brewing head, and the water supply channel is located adjacent to the water passage chamber, the water heating device can firstly discharge hot water into the water passage chamber to preheat the brewing head, and then supply hot water through the water supply channel, so as to meet the requirements of stable temperature of the first outlet water. When a coffee machine using the above water passage structure is turned on to make coffee, the temperature can meet the requirements to effectively improve the taste and quality of coffee.

The above-mentioned embodiments only illustrate the principle and the effects of the present invention, and are not used to limit the present invention. Any person familiar with the technology may modify or change the above-mentioned embodiments without departing from the spirit and scope of this invention. Therefore, all equivalent modifications or changes made by a person with ordinary knowledge in the technical field without departing from the spirit and technical ideas disclosed in the present invention shall still be covered by the claims of the present invention.

## Claims

1. A water passage structure comprising a water heating device (17) and a brewing head (10, 20), the brewing head (10, 20) comprising a drainage inlet (111, 222), a water passage chamber (115, 215), a drainage outlet (113, 211) and a water supply channel (110, 210), wherein the water passage chamber (115, 215) is communicated with the drainage inlet (111, 222) and the drainage outlet (113, 211), the water supply channel (110, 210) is located adjacent to and isolated from the water passage chamber (115, 215), the drainage inlet (111, 222) and a water inlet (116, 221) of the water supply channel (110, 210) are each controllable to be communicated with a water outlet (173) of the water heating device (17).

2. The water passage structure according to claim 1, wherein at least a buffer rib (112, 212) is provided in the water passage chamber (115, 215).

3. The water passage structure according to claim 1, wherein the brewing head (10, 20) comprises a main body (11, 21) and a cover (12, 22), the main body (11, 21) is in a groove shape and has an opening at an upper side, the cover (12, 22) is sealed at the opening through a sealing element (13), the water passage chamber (115, 215) is jointly defined by the cover (12, 22) and a bottom wall (117, 217) and a side wall (118, 218) of the main body (11, 21).

4. The water passage structure according to claim 3, wherein the water supply channel (210) is vertically arranged on an inner side of the bottom wall (217) of the main body (21), the water inlet (221) of the water supply channel (210) vertically penetrates through the cover (22), a water outlet (214) of the water supply channel (210) penetrates through the bottom wall (217) of the main body (21), the drainage inlet (222) vertically penetrates through the cover (22), the drainage outlet (211) transversely penetrates through the side wall (218) of the main body (21).

5. The water passage structure according to claim 3, wherein the water supply channel (110) transversely penetrates into the side wall (118) of the main body (11) and extends to the bottom wall (117) of the main body (11) along an inner side of the side wall (118), a water outlet (114) of the water supply channel (110) penetrates through the bottom wall (117) of the main body (11), each of the drainage inlet (111) and the drainage outlet (113) transversely penetrates through the side wall (118) of the main body (11).

6. The water passage structure according to claim 5, wherein a height between the drainage inlet (111) and the bottom wall (117) of the main body (11) is greater than that between the drainage outlet (113) and the bottom wall (117) of the main body (11), and the water heating device (17) is arranged on the cover (12) or integrally formed with the cover (12).

7. The water passage structure according to any one of claims 1 to 6, further comprising a valve (18), a main pipe (171), a drainage pipe (181) and a water supply pipe (182), wherein the valve (18) comprises a first water inlet (183), a first water outlet (185) and a second water outlet (186), the main pipe (171) communicates the water outlet (173) of the water heating device (17) with the first water inlet (183), the drainage pipe (181) communicates the first water outlet (185) with the drainage inlet (111, 222), the water supply pipe (182) communicates the second water outlet (186) with the water inlet (116, 221) of the water supply channel (110, 210).

8. The water passage structure according to claim 7, wherein the valve (18) is a solenoid valve, the valve (18) is configured to switch the communication state between the first water inlet (183) and the first water outlet (185) or the second water outlet (186) according to control signals.

9. A coffee machine comprising the water passage structure according to any one of claims 1 to 8.

10. The coffee machine according to claim 9, further comprising a filter (19) for containing coffee powder, when the filter is (19) installed on the brewing head (10, 20) of the water passage structure, a brewing chamber (191) is jointly defined by the filter (19) and the brewing head (10, 20), the brewing chamber (191) is located adjacent to and isolated from the water passage chamber (115, 215) of the brewing head (10, 20), the water outlet (114, 214) of the water supply channel (110, 210) is communicated with the brewing chamber (191).

11. A coffee machine comprising a water heating device (17), a valve (18), a brewing head (10, 20) and a filter (19), the valve (18) having a first water inlet (183), a first water outlet (185) and a second water outlet (186), the brewing head (10, 20) comprising a drainage inlet (111, 222), a water passage chamber (115, 215), a drainage outlet (113, 211) and a water supply channel (110, 210), the filter (19) being defined with a brewing chamber (191) configured for containing coffee powder to be brewed by hot water;
wherein each of the drainage inlet (111, 222) and the drainage outlet (113, 211) is communicated with the water passage chamber (115, 215), each of the water supply channel (110, 210) and the brewing chamber (191) is located adjacent to and isolated from the water passage chamber (115, 215), a water outlet (173) of the water heating device (17) is communicated with the first water inlet (183) of the valve (18) through a main pipe (171), the first water outlet (185) of the valve (18) is communicated with the drainage inlet (111, 222) of the brewing head (10, 20) through a drainage pipe (181), the second water outlet (186) of the valve (18) is communicated with a water inlet (116, 221) of the water supply channel (110, 210) through a water supply pipe (182), a water outlet (114, 214) of the water supply channel (110, 210) is communicated with the brewing chamber (191);
wherein before the coffee powder is brewed, the valve (18) is controlled to switch to a first state in which the first water inlet (183) of the valve (18) communicates with the first water outlet (185) of the valve (18) and is isolated from the second water outlet (186) of the valve (18), and hot water from the water heating device (17) enters the water passage chamber (115, 215) to preheat the brewing head (10, 20);
wherein after the brewing head (10, 20) is preheated, the valve (18) is controlled to switch to a second state in which the first water inlet (183) of the valve (18) communicates with the second water outlet (186) of the valve (18) and is isolated from the first water outlet (185) of the valve (18), and hot water from the water heating device (17) enters the brewing chamber (191) through the water supply channel (110, 210) to brew the coffee powder into coffee.

12. The coffee machine according to claim **11,** wherein the brewing head (10, 20) comprises a main body (11, 21) and a cover (12, 22), the main body (11, 21) is in a groove shape and has an opening at an upper side, the cover (12, 22) is sealed at the opening through a sealing element (13), the water passage chamber (115, 215) is jointly defined by the cover (12, 22) and a bottom wall (117, 217) and a side wall (118, 218) of the main body (11, 21).

13. The coffee machine according to claim **12,** wherein the water supply channel (110) transversely penetrates into the side wall (118) of the main body (11) and extends to the bottom wall (117) of the main body (11) along an inner side of the side wall (118), each of the drainage inlet (111) and the drainage outlet (113) transversely penetrates through the side wall (118) of the main body (11), and the water outlet (114) of the water supply channel (110) penetrates through the bottom wall (117) of the main body (11).

14. The coffee machine according to claim **12,** wherein the water supply channel (210) is vertically arranged on an inner side of the bottom wall (217) of the main body (21), the water supply channel (210) is located in a middle of the bottom wall (217) and surrounded by the water passage chamber (215), the drainage inlet (222) vertically penetrates through the cover (22), the drainage outlet (211) transversely penetrates through the side wall (218) of the main body (21), and the water outlet (214) of the water supply channel (210) penetrates through the bottom wall (217) of the main body (21).

15. The coffee machine according to claim **11,** wherein the valve (18) is a solenoid valve, and the coffee machine further comprises a controller (172) configured to control the solenoid valve.
